(19) Europäisches Patentamt
European Patent Office
Office européen des brevets

(11) **EP 3 072 113 B1**

(12) **EUROPEAN PATENT SPECIFICATION**

(45) Date of publication and mention of the grant of the patent:
**22.12.2021 Bulletin 2021/51**

(51) Int Cl.:
*G07C 9/15* (2020.01)      *E05G 5/00* (2006.01)
*G01S 13/88* (2006.01)      *G01S 13/00* (2006.01)
*G01S 13/87* (2006.01)      *G01S 13/89* (2006.01)

(21) Application number: **14863169.0**

(22) Date of filing: **17.11.2014**

(86) International application number:
**PCT/US2014/065879**

(87) International publication number:
**WO 2015/077167 (28.05.2015 Gazette 2015/21)**

(54) **SMART SCREENING BARRIER**

INTELLIGENTE SCREENING-BARRIERE

BARRIÈRE D'INSPECTION INTELLIGENTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:    19.11.2013    US 201361905940 P
22.01.2014    US 201414160895
28.02.2014    US 201461945921 P
23.04.2014    US 201414259603
30.06.2014    US 201414319222

(43) Date of publication of application:
**28.09.2016 Bulletin 2016/39**

(73) Proprietor: **APSTEC Systems Ltd**
**IKL 1200 Iklin (MT)**

(72) Inventors:
• **KELLERMANN, David Gustav**
  **Iklin IKL 1200 (MT)**
• **KUZNETSOV, Andrey**
  **St. Petersburg 194223 (RU)**
• **GORSHKOV, Igor**
  **St. Petersburg 199178 (RU)**

(74) Representative: **Lederer & Keller Patentanwälte Partnerschaft mbB**
**Unsöldstraße 2**
**80538 München (DE)**

(56) References cited:
WO-A1-2012/107900      US-A- 4 586 441
US-A1- 2008 250 726      US-B1- 6 484 650
US-B1- 7 119 682

**Description**

FIELD OF THE INVENTION

This invention relates to a security barrier for the controlled transit of people, animals, and carried items, particularly for tourist attraction areas, high-capacity and high-flow areas, and mass transit areas such as train stations and airports.

BACKGROUND OF THE INVENTION

U.S. Patent Application No. 2003/0136052, by De Boer, discloses a revolving door, comprising a rotatable partition embodied such that in, at, or on the partition, one or more means for the detection of inadmissible goods is provided. U.S. Patent No. 6,742,301, to Schwarz, also discloses a revolving door, but with a metal detection function. Both inventions are a kind of automatic detection device, but are short in their capability of dealing with an individual who might be wearing or carrying a hidden dangerous object.

U.S. Patent No. 7,707,951, to Prasad, discloses a substantially automatic, robotic-like system to aid in preventing crime in high trafficked buildings and other public sites, comprising a counterclockwise rotating door which permits access in one direction only and is manually operated, two personnel detecting sensors, at least two other detectors, a low voltage power source and low voltage electronics, an electronic design to substantially automatically detect and detain persons attempting to enter a protected facility with a weapon or leave with a protected item, and where the entire security system is essentially contained within the space employed by the entry and or exit doorway. U.S. Patent Application No. 4,586,441 by Zekich discloses a security system for selectively allowing passage from a non-secure region to a secure region.

Prior art terrorist uncovering schemes, including but not limited to those mentioned above, are dangerous, since a terrorist most often detonates when realizing he has been caught in order to injure as many bystanders as possible. Security personnel who must approach a potential suicide bomber stand a very high risk, which also potentially impairs effectiveness of the security approach. It is advantageous to first detect potential target individuals and then confine them, in a secluded manner, to prevent harm to bystanders even if the target immediately detonates a worn explosive.

Additional challenges include: (1) how/where to install the system to achieve the maximum benefit, and (2) how the end user will treat cases of detection. Since a certain rate of false alarms will occur, there is a need for confirmation systems, and when a real threat is detected, it is essential to reduce as much possible damage as possible, e.g., by separating the threat from surrounding individuals and structures. These aspects should also be achieved while retaining acceptable traffic flow, or at least with minimal interruption of the same.

SUMMARY OF THE INVENTION

Claim 1 defines the invention. The present invention claims a security barrier (also referred to as system) for the screening of individuals, e.g., for application in areas with high traffic flows. The invention comprises at least two revolving door mechanisms, used as entrance and exit points to/from an isolated area located between the doors. A security barrier for screening of individuals is thus claimed, comprising at least two stationary cylinders, a revolving mechanism situated within each stationary cylinder comprising at least one blade comprised of blast-resistant material forming a revolving door, and an isolated area comprising at least two walls, located between said at least two stationary cylinders, wherein a first means for detection is employed within the isolated area as an individual travels through one of the stationary cylinders as an entrance cylinder, then through the isolated area, and finally through one of the stationary cylinders as an exit cylinder, as the revolving doors spin continuously around an axis in their respective stationary cylinders, creating a flow for continuous screening of moving individuals. Preferably, the security barriers of the present invention comprise a blast-resisting material within the walls of the isolated areas. The doors, as well as the walls and surrounding structures of the isolated area, are preferably made of blast-resisting glass and/or concrete, in order to mitigate a potential explosion or other act of terrorism. Screening mechanisms can be employed in the isolated area as well as within the entrance and exit points. More screening devices/mechanisms lower the likelihood of false alarms and allow for further confirmation of suspected individuals. The security barrier of the present invention can comprise e.g. a second means of detection employed in the entrance cylinder and a third means of detection employed in the exit cylinder wherein said revolving mechanisms stop to seal the isolated area upon a threshold-exceeding signal received from said means of detection. Various means for screening can be used including, but not limited to, metal detection, microwave imaging, video imaging, and infrared imaging. An alarm can be triggered if a signal from any of the screening mechanisms exceeds a pre-determined threshold value. Alternatively, a silent alarm can be triggered in a similar fashion, in order to alert and obtain first responders before alarming an individual carrying a potential explosive.

BRIEF DESCRIPTION OF THE DRAWINGS

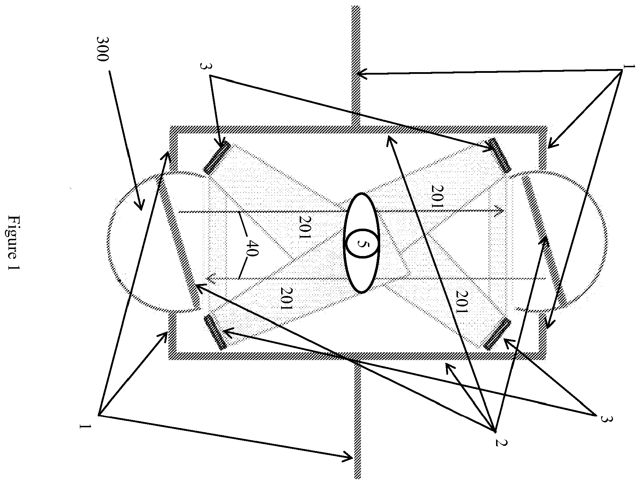

Fig. 1 shows an example (top view/view from above) of the present invention, illustrating how a screening area is located between two revolving doors and how receivers and transmitters can be positioned in the area between doors. It also shows an example of how the concrete and blast-resistant materials/barriers can be positioned.

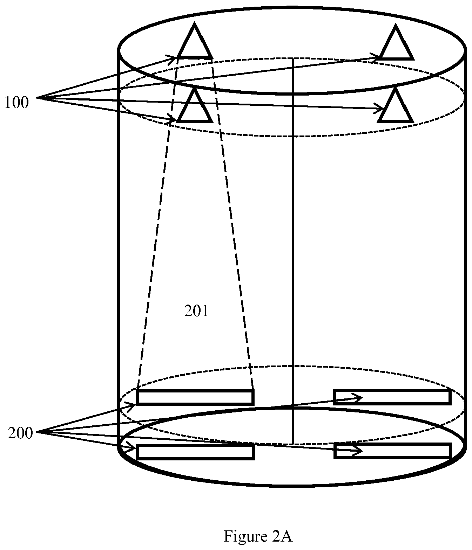

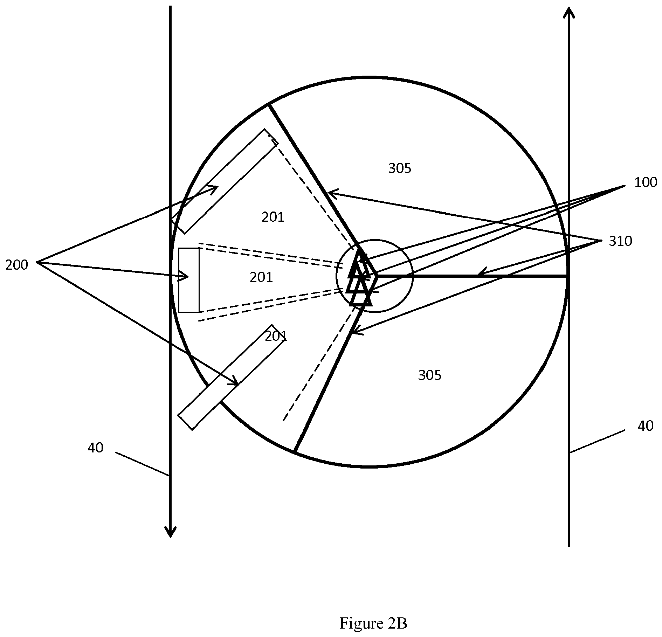

Fig. 2. Figs. 2A and 2B show examples of how receivers and transmitters can be positioned within a revolving door itself — (2A) from top to bottom (side view), and (2B) from inside axel to outside boundary (top view).

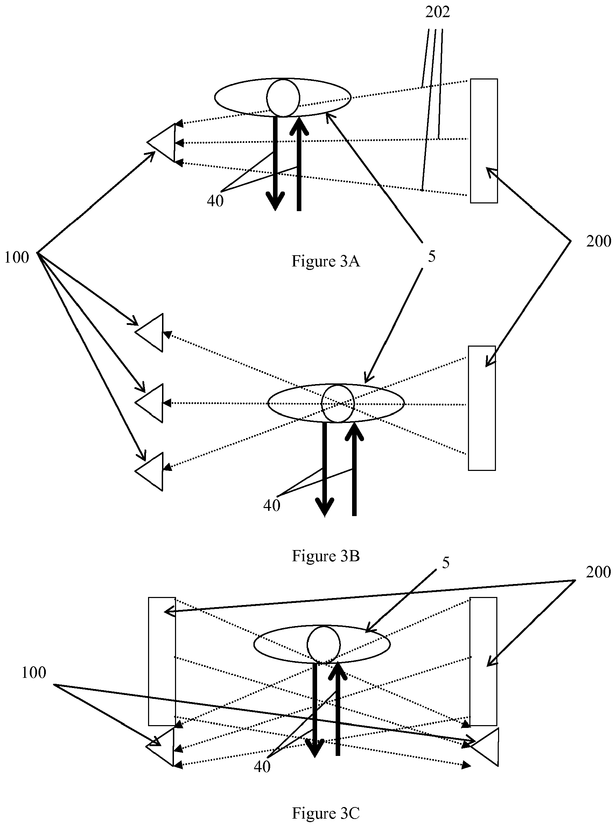

Fig. 3 (top view). Fig. 3A shows an example of one embodiment of the present invention, where one transmitter, or transmitting array, sending various signals to one receiver. Fig. 3B shows another embodiment of the present invention, where one transmitting array send various signals to various receivers. Fig. 3C shows yet another embodiment where several transmitters and receivers are employed together.

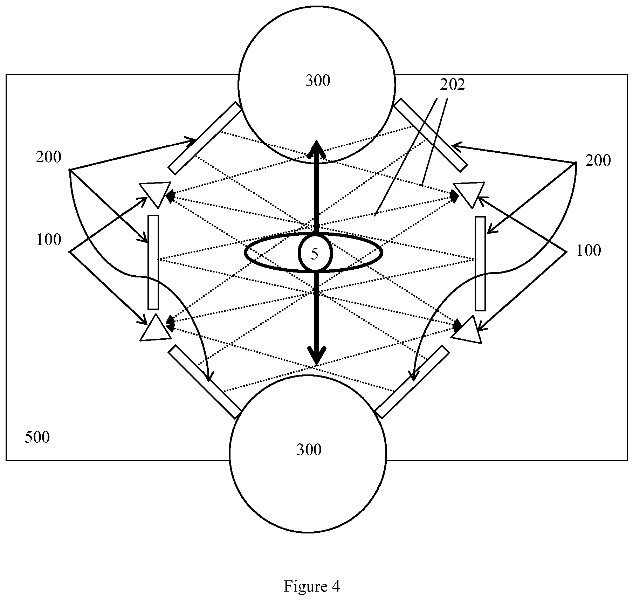

Fig. 4 (top view) shows another embodiment of the present invention, where various transmitters and receivers of the means for detection are positioned in a circular fashion within a smart room between entrance and exit points.

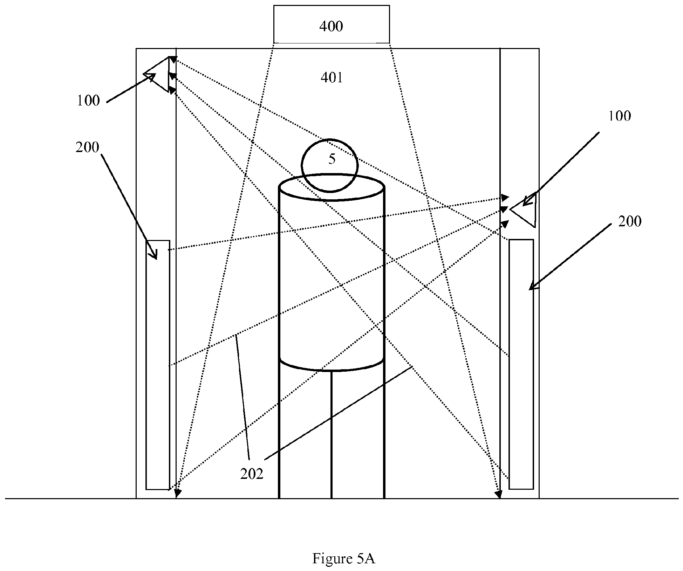

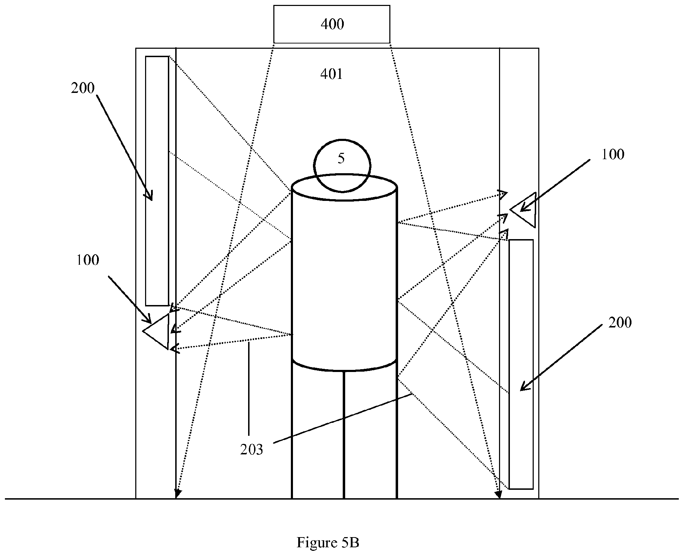

Fig. 5 (side view/view from the front or back). Figs. 5A and 5B show examples of the heights at which receivers and transmitters can be positioned to obtain various screening angles, as well as the coupling of a second means for detection — a video imaging system. Fig. 5A regards transmitting means of detection. Fig. 5B regards reflecting means of detection.

DETAILED DESCRIPTION OF THE PREFERRED EMBODIMENT

Definitions

"Means for detection," as used herein, refer to various means for screening/detection which are applicable with the presently claimed system including, but not limited to, metal detection, microwave detection, video detection, microwave-video imaging, infrared detection, electromagnetic imaging, x-ray imaging, ultrasonic imaging, ultrasound imaging, and other known methods. Methods of detection are disclosed by the following patents: U.S. Patent No. 8,159,534, to Kuznetsov et al., U.S. Patent No. 8,228,374, to Kuznetsov et al., U.S Patent No. 6,791,487, to Singh et al., U.S. Patent No. 6,469,624, to Whan et al., U.S. Patent No. 5,600,303, to Husseiny et al, and PCT/US Patent Application No. PCT2013/027932, filed by Bergen et al.

"Microwave (MW) imaging," as used herein for the means of detection, can be achieved using various techniques. In one embodiment, the active microwave detection means disclosed in U.S. Patent Application No. 2014/160,895 (using methods based on the reflective characteristics of microwaves off of dielectric objects hidden underneath clothing or within luggage) are used to detect potentially dangerous objects within the system claimed herein. See also U.S. Patent No. 8,159,534, to Kuznetsov et al., U.S. Patent No. 8,228,374, to Kuznetsov et al., which are also mentioned above as additional applicable means for detection. In some embodiments, the MW imaging is performed by reflecting microwaves, while other embodiments employ a transmitted MW imaging method, as detailed in the patents listed above or described herein. Preferably, the means of detection comprised in the security barriers of the present invention comprises a reflected microwave imagining system or a transmitted microwave imaging system. In one embodiment, the means of detection comprised in the security barriers of the present invention comprises microwave imaging or a microwave imaging system synchronized with video imaging or a video imaging system. When a first, second, and third means of detection is used in the present invention, each of them can comprise transmitted or reflected microwave imaging. In one embodiment, each of them comprises a microwave imaging system synchronized with a video imaging system. The active microwave detection means can be coupled with means for video imaging (e.g., video cameras) in order to create a synchronized real-time image combining both microwave and video images of the same target at the same point in time.

The term "adjacent," as used herein, is defined as touching (i.e. in contact with), or within 5 meters of, any outside boundary of the isolated area (smart room) as described herein. The term is used to describe the positioning of blast-resistant concrete material structures which may be placed near or along the screening areas described herein. Such material structures, used, e.g., to minimize a blast radius, are placed in various strategic locations around a screening area, but they must be positioned within a certain range in order to be beneficial. Preferably, the security barriers of the present invention comprise a blast-resisting material structure adjacent to the isolated area.

The present invention improves on prior art methods by adding the capability to detect subjects at a forced (even if only slightly different) slower pace due to the revolutions of the revolving door and the maximum capacity within each section of the revolving doors. Additionally, the present invention improves on prior art methods because as a potential target is determined to be a potential threat, he or she is immediately isolated, and even if an explosive is detonated, individuals nearby will not be harmed because of the strategically placed revolving door and the surrounding structural components (including, but not limited to, concrete-containing barriers and blast-resistant glass) strategically placed in specific locations to isolate a detonated explosive within or near the revolving door.

Fig. 1 shows an example of a smart room with two revolving doors acting as entrance and exit (top view). The revolving doors are formed **300** stationary cylinders comprising at least one blade **310** comprised of blast-resistant material or concrete, but preferably glass (see Fig. 2B). The blades **310** create sections **305** within each stationary cylinder, and each stationary cylinder acts as either an entrance point or an exit point for moving individuals. Two types of barriers examples are illustrated in Fig. 1: concrete walls **1** (which could be installed in pre-fabricated sections), and blast-resistant glass or other blast-resistant material **2**, which is used both in wall material and in revolving door material. The walls and doors combine to form the "smart room," wherein various detection methods can be used to screen individuals moving through the space. Every material which makes up the smart room is comprised of blast-resistant glass and/or concrete, which also minimizes the effect of a potential explosion or other dangerous act. Fig. 1 also shows an example of how any means of detection can be positioned in the corners **3** of a screening area in order to obtain various interrogating areas **201**. Individuals/traffic **5** can move in either direction **40**, thus each revolving door can act as a means for entering and as a means for exiting, depending on the direction of movement of a given individual.

Figs. 2A and 2B shows examples of how receivers **200** and transmitters **100** can be positioned within a revolving door, either (2A) transmitting from the bottom portion of the door to the top portion of the door, and vice versa; or (2B) from the outside boundary of the door to the inner boundary, and vice versa. As shown, several transmitters **200** and receivers **100** can be positioned along different portions of a door in order to obtain as many interrogating areas **201** as needed. Referring to Fig. 2B, each section **305** of each revolving door **300**, separated by blades **310** made of blast-resistant material or concrete, can comprise the same setup for means of detection as depicted in only one of the sections **305** in the figure. This allows for continuous flow and screening of individuals, as they move in either direction **40**. If a high potential exists for false alarms, an embodiment employing additional means for detection within the revolving doors will help to lower the rate of such false alarms by screening a target several times (e.g., once in the first revolving door, a second time in the area between doors, and even a third time in the second revolving door). This particular embodiment, due to the ability to screen in more areas of the system, allows for a potentially faster flow of traffic but might also risk harm to more individuals because greater flow will lead to potentially more persons being located within the system at the same time (i.e., at a time when a threat is also located in the same area).

Figs. 3A, 3B, and 3C depict examples of various embodiments of placing the transmitters and receivers for means of detection employing transmitted signals. As a given individual **5** moves through a screening area, and in either direction **40**, a transmitter, or array of transmitters **200**, transmits various signal at various angles **202** to one receiver **100** (Fig. 3A) or to various receivers **100** (Fig. 3B). It is irrelevant on which side the transmitters and receivers are located so long as they are across from each other at any angle (note: for reflecting means of detection, the receivers and transmitters must be on the same side). Fig. 3C shows an example employing two transmitters, or arrays of transmitters **200** sending signals to two receivers **100**, creating two screening areas via signals at various angles.

Fig. 4 shows another example of a smart room **500** between two revolving doors **300** with a means of detection employing 6 transmitters **200** and 4 receivers **100**, in a circular fashion. The various angles of signals **202** create many screening areas and viewpoints, thus allowing for greater detection accuracy as individuals **5** move through the smart room **500**.

Fig. 5A and 5B (side view) shows an example of the various heights transmitters **200** and receivers **100** can be positioned, either within a smart room or within a door, creating various angles of signals (transmitted signals **202**, or reflected signals **203**) for detection. Fig. 5A depicts a transmitting signal **202** detection system. Fig. 5B depicts a reflecting signal **203** detection system. Additionally, these figures show an example of how a video imaging system **400** can be positioned to create an additional video screening area **401** thus forming, e.g., a combined MW-video imaging system. The additional video imaging can be synchronized with the MW imaging in real time to allow for more accurate identification of materials or individuals (e.g., an aspect that MW imaging, or any other coupled detection means, might not be able to obtain in time).

In one embodiment of the present invention, the detection means is located in an area **500** located between two or more revolving doors **300** (i.e. the smart room, isolated area). Thus, in this embodiment, the revolving doors **300** act only as a flow-controlling mechanism and not as a screening mechanism. By only allowing a maximum capacity (e.g., one person per section **305** of each revolving door **300**, or two persons per section, and so on, based on the amount and size of the sections) of individuals to enter the smart room **500** at a time, the revolving doors act as a barrier to entering a screening area termed the smart room, which employs any means of detection known in the art or otherwise disclosed herein. Controlling the speed (e.g., slowing down) of traffic minimizes the chance of overlapping individuals (which causes screening problems, potentially hiding objects because of a shadowing/hiding effect), and creates a steady flow in areas including but not limited to mass transit hubs. In this embodiment, when a dangerous hidden object is detected, the potential threat is isolated within the smart room by the revolving doors automatically stopping in response to an alarm signal. It should be noted that the design of each revolving door can contain different amounts of blades, or separations **310**. Thus, a revolving door can have 2 sections **305**, 3 sections, 4 sections, and so on. Also, the first revolving door need not contain the same amount of sections/blades as other doors making up the same smart room. For example, the first door can have 3 sections, while a second door has only two sections. It should also be noted that other embodiments can comprise more than two revolving doors in order to control the flow of persons and to create more isolated areas for additional screening (e.g., three revolving doors with 2 separate isolated areas).

In another embodiment of the present invention, a system is installed between two revolving doors (see Figs. 1 and 4, for example). Individuals and their belongings **5** are screened while they are between the doors, and in the case of a detected and signaled threat (the signal is based on the detection means reaching a threshold level of detection of a particular material), the revolving doors stop, creating a closed, or lock mode, isolating the suspected individual. In one embodiment the security barrier of the present invention comprises an automatic locking mechanism wherein the revolving doors stop to seal the isolated area in response to an alarm signaling an exceeded threshold to place a suspected individual in isolation. In another embodiment the security barrier of the present invention comprises an automatic locking mechanism wherein the revolving doors stop to seal the isolated area upon a threshold-exceeding signal received from the means of detection and place a suspected individual in isolation. This provides time for additional scanning (e.g., about 10 frames per second) and if the alarm does not continue or accumulate, the revolving doors begin moving again. In such a case, interference/stoppage of traffic flow lasts only for a few seconds and appears normal. If, however, the alarm continues and/or accumulates, the threat must be taken seriously and the target remains trapped because the revolving doors do not resume motion. Several other detection means can be employed in various embodiments to continue to monitor and confirm the threat while a target is trapped within a smart room.

In yet another embodiment of the presently claimed system, a reflected microwave imaging screening method (see Fig. 5B, for example) is the means for detection employed in the smart room and/or the revolving doors. One microwave imaging portal is setup by placing pairs of transmitters **200** and receivers **100** on the same side of the smart room or a revolving door, e.g. one below the other along a vertical line or one next to the other along a horizontal line. More pairs of receivers and transmitters allow for more angles of detection **202** to screen individuals travelling through the smart room **500** (see Fig. 4 for an illustration of one configuration of transmitters and receivers). An alarm is triggered if a signal from any of the screening mechanisms exceeds a pre-determined threshold value. The alarm can automatically, or according to a manual input by an operator, causes the smart room to lock (e.g., the revolving doors stop revolving) and isolate the target that caused the alarm. Alternatively, or additionally, a silent alarm can be triggered in a similar fashion (i.e. threshold value), in order to alert and obtain first responders before locking the smart room or otherwise alarming an individual carrying a potential explosive. The security barriers of the present invention can e.g. comprise a silent alarm emitted in response to a threshold-exceeding signal from the means of detection to alert authorities without affecting a suspected individual, or to alert authorities before sealing the isolated area and without affecting a suspected individual. Additional screening can occur via the same means or additionally coupled means for detection, which activate only for confirmation purposes (e.g., after an alarm is signaled). After further screening, the smart room can either remain locked (if the signal/alarm remains) or the doors will return to their normal function (e.g., revolving, opening-closing automatically).

In another embodiment also employing microwave imaging, the imaging can be performed via transmission of microwaves through objects located in the screening areas (see Fig. 5A, for example). In this particular embodiment, inspection of the object is based on analyzing the parameters of quasi-coherent microwave radiation transmitted through a monitored space. The dielectric constant, the shape, and the volume of an object carried on the body of an individual or in luggage are determined. Detection occurs by reconstructing a distribution of the dielectric constant value in the monitored space and then distinguishing the areas in space where dielectric constant values are close to the dielectric constant values of dangerous materials. The dielectric constant of the object is determined by measuring simultaneously a phase and an amplitude of a MW signal passing through the target. A single source or multiple sources of MW radiation may be used, as well as one receiver or multiple receivers of MW radiation. In some embodiments, the source(s) of radiation generate(s) radiation at multiple frequencies. The received signals are used to process changes in optical path lengths. The microwave signal transmitted through the interrogated object (e.g., a backpack) is compared with a signal which passes the same distance without the backpack in its way, i.e., an "optical path length through free space." The change in the optical path length of the microwave is calculated by measuring the shift between the maximum values of signal conversion (using the equation below) and its relative value when there is no object at all.

The equation used to calculate the maximum values discussed above is as follows:

$$|F(x)|^2 = \left( \sum_{i=1}^{Nf} \frac{A_i}{A_0} \cdot \cos\left( \varphi_i - \varphi_0 + 2\pi \frac{x \cdot f_i}{c} \right) \right)^2 + \left( \sum_{i=1}^{Nf} \frac{A_i}{A_0} \cdot \sin\left( \varphi_i - \varphi_0 + 2\pi \frac{x \cdot f_i}{c} \right) \right)^2$$

where $Nf$ = number of frequencies, $f_i$ = corresponding frequencies, $A_i$ = amplitude of the signal transmitted through the inspected object, $A_0$ = amplitude of "free space" signal, $\varphi_i$ = phase of the signal transmitted through the inspected object,

$\varphi_i 0$ = phase of "free space" signal, C = speed of light in vacuum, and $x$ = parameter showing the distance value. The shift in a length of an optical path is calculated from the F(x) distribution (Fourier transform) and equals the variable "x" where F(x) value is at its maximum. In case of a "free space" the shift in a length of an optical path is zero and the F(x) value has its maximum at x=0.

Together with the measurement of the optical path lengths, the geometric dimensions and shape of the inspected object can also be measured by constructing a 3D stereo optical image of the object using, e.g., a system of video cameras comprising a stereo video pair. Joint information about dimensions of the inspected object and value showing the lengthening of the optical path of electromagnetic waves of the chosen frequency range makes it possible to determine the dielectric constant of the object, which, together with measurements of geometric dimensions and shape analysis, is used to determine a danger level of a screened object (by comparing the object's characteristics with reference characteristics of explosives and explosive devices).

In the event that a detected person is actually carrying an explosive, and in the case of a possible detonation, the damage to the surrounding areas and individuals is reduced by (1) concrete and (2) blast-resistant glass or other blast-resistant material, strategically located in specific positions to deflect and minimize a blast impact (see Fig.1, for example). The blast-resistant glass can optionally be coated (i.e. coupled with) plexi-glass material. Concrete and blast-resisting glass in the walls of the system, the material comprising the revolving doors, and/or in areas immediately surrounding the smart room, in combination with a screening mechanism, perform at least the following functions: (a) the detection, potentially one-by-one (passing through), in mass transit, (b) automatically stopping/isolating a target if and when detected, (c) allowing more time for other technology (e.g. not real-time technology) to further resolve an initial alarm, and (d) mitigating damage in case of explosion or other dangerous act (by, e.g., reducing blast pressure).

In another embodiment of the present invention, the screening, or detection, means can be employed in both the sections of the revolving doors and the isolated area(s) between the doors, thus allowing for a double-, triple-, and so on, ability to monitor a target (thus resulting in more accurate screening and alarm rates). The transmitters **200** can be placed across from the receivers **100** in a number of fashions, both within the revolving doors **300** and within an area between the doors **500**.

**Claims**

1.   A security system for screening of individuals (5), comprising:

two stationary cylinders,
a revolving mechanism situated within each stationary cylinder comprising at least one blade (310) forming a revolving door (300),
and an isolated area (500) comprising at least two walls (1), located between said two stationary cylinders, wherein a first means of for detection is employed within the isolated area as an individual (5) travels through one of the stationary cylinders as an entrance cylinder, then through the isolated area, and finally through one of the stationary cylinders as an exit cylinder, **characterized in that** the revolving doors (300) are configured to spin continuously around an axis in their respective stationary cylinders, creating a flow for continuous screening of moving individuals (5);
each revolving door (300) is configured to act as a means for entering and as a means for exiting for enabling individuals to move in either direction; and the at least one blade (310) within each stationary cylinder forming a revolving door is comprised of a blast-resistant material.

2.   The security system of claim 1, wherein said first means of detection comprises a reflected microwave imaging system.

3.   The security system of claim 1 or 2, wherein said first means of detection comprises a transmitted microwave imaging system.

4.   The security system of any of claims 1-3, further comprising an automatic locking mechanism wherein the revolving doors (300) stop to seal the isolated area in response to an alarm signaling an exceeded threshold to place a suspected individual (5) in isolation.

5.   The security system of any of claims 1-4, further comprising a silent alarm emitted in response to a threshold-exceeding signal from said first means of detection to alert authorities without affecting a suspected individual (5).

6.   The security system of any of claims 1-5, comprising a second means of detection employed in the entrance cylinder and a third means of detection employed in the exit cylinder wherein said revolving mechanisms stop to seal the isolated area upon a threshold-exceeding signal received from said second or third means of detection.

7.  The security system of claim 6, further comprising a silent alarm emitted in response to a threshold-exceeding signal from said second or third means of detection to alert authorities before sealing the isolated area and without affecting a suspected individual (5).

8.  The security system according to claim 6 or 7, wherein said first, second and third means of detection each comprise a transmitted or a reflected microwave imaging system.

9.  The security system of any of claims 6-8, wherein said first, second and third means of detection each comprise a microwave imaging system synchronized with a video imaging system.

10. The security system of any of claims 1-9, further comprising blast-resisting material within the walls of the isolated area.

11. The security system of any of claims 1-10, further comprising at least one blast-resisting material structure adjacent to the isolated area.

**Patentansprüche**

1.  Sicherheitssystem zum Screening von Individuen (5), umfassend:

    zwei stationäre Zylinder,
    einen in jedem stationären Zylinder befindlichen Drehmechanismus, der mindestens einen Flügel (310) umfasst, der eine Drehtür (300) bildet,
    und einen isolierten Bereich (500), der mindestens zwei Wände (1) umfasst, die sich zwischen den zwei stationären Zylindern befinden,
    wobei eine erste Nachweiseinrichtung in dem isolierten Bereich eingesetzt wird, wenn ein Individuum (5) durch einen der stationären Zylinder als ein Eingangszylinder, dann durch den isolierten Bereich und schließlich durch einen der stationären Zylinder als ein Ausgangszylinder fährt, **dadurch gekennzeichnet, dass** die Drehtüren (300) dafür ausgebildet sind, sich kontinuierlich um eine Achse in ihren jeweiligen stationären Zylindern zu drehen, was einen Umlauf für kontinuierliches Screening sich bewegender Individuen (5) erzeugt;
    jede Drehtür (300) dafür ausgebildet ist, als eine Eingangseinrichtung und als eine Ausgangseinrichtung zu agieren, die ermöglichen, dass sich Individuen in beide Richtungen bewegen können; und
    der mindestens eine Flügel (310) in jedem stationären Zylinder, der eine Drehtür bildet, aus einem windbeständigen Material besteht.

2.  Sicherheitssystem nach Anspruch 1, wobei die erste Nachweiseinrichtung ein Bildgebungssystem mit reflektierten Mikrowellen umfasst.

3.  Sicherheitssystem nach Anspruch 1 oder 2, wobei die erste Nachweiseinrichtung ein Bildgebungssystem mit durchgelassenen Mikrowellen umfasst.

4.  Sicherheitssystem nach einem der Ansprüche 1 - 3, ferner umfassend einen automatischen Verriegelungsmechanismus, wobei die Drehtüren (300) in Reaktion auf einen Alarm, der einen überschrittenen Schwellenwert signalisiert, stoppen, um den isolierten Bereich zu verriegeln, um ein verdächtiges Individuum (5) zu isolieren.

5.  Sicherheitssystem nach einem der Ansprüche 1 - 4, ferner umfassend einen stillen Alarm, der in Reaktion auf ein Schwellenwert-überschritten-Signal von der ersten Nachweiseinrichtung abgegeben wurde, um Behörden zu alarmieren, ohne auf ein verdächtiges Individuum (5) einzuwirken.

6.  Sicherheitssystem nach einem der Ansprüche 1 - 5, umfassend eine zweite Nachweiseinrichtung, die im Eingangszylinder eingesetzt wird, und eine dritte Nachweiseinrichtung, die im Ausgangszylinder eingesetzt wird, wobei die Drehmechanismen, nachdem ein Schwellenwert-überschritten-Signal von der zweiten oder dritten Nachweiseinrichtung empfangen worden ist, stoppen, um den isolierten Bereich abzuriegeln.

**7.** Sicherheitssystem nach Anspruch 6, ferner umfassend einen stillen Alarm, der in Reaktion auf ein Schwellenwert-überschritten-Signal von der zweiten oder dritten Nachweiseinrichtung abgegeben wurde, um Behörden zu alarmieren, bevor der isolierte Bereich abgeriegelt wird und ohne auf ein verdächtiges Individuum (5) einzuwirken.

**8.** Sicherheitssystem nach Anspruch 6 oder 7, wobei die erste, zweite und dritte Nachweiseinrichtung jeweils ein Bildgebungssystem mit durchgelassenen oder reflektierten Mikrowellen umfassen.

**9.** Sicherheitssystem nach einem der Ansprüche 6 - 8, wobei die erste, zweite und dritte Nachweiseinrichtung jeweils ein Mikrowellenbildgebungssystem umfassen, das mit einem Videobildgebungssystem synchronisiert ist.

**10.** Sicherheitssystem nach einem der Ansprüche 1 - 9, ferner umfassend ein windbeständiges Material in den Wänden des isolierten Bereiches.

**11.** Sicherheitssystem nach einem der Ansprüche 1 - 10, ferner umfassend mindestens eine Struktur aus windbeständigem Material angrenzend an den isolierten Bereich.

## Revendications

**1.** Système de sécurité pour l'inspection d'individus (5), comprenant : deux cylindres stationnaires,

un mécanisme tournant situé à l'intérieur de chaque cylindre stationnaire comprenant au moins une lame (310) formant une porte tournante (300),
et une zone isolée (500) comprenant au moins deux parois (1), située entre lesdits deux cylindres stationnaires, dans lequel un premier moyen de détection est employé à l'intérieur de la zone isolée lorsqu'un individu (5) se déplace à travers un des cylindres stationnaires en tant que cylindre d'entrée, puis à travers la zone isolée, et enfin à travers un des cylindres stationnaires en tant que cylindre de sortie, **caractérisé en ce que** les portes tournantes (300) sont configurées pour tourner de manière continue autour d'un axe dans leurs cylindres stationnaires respectifs, créant un écoulement pour une inspection de manière continue des individus en déplacement (5) ;
chaque porte tournante (300) est configurée pour agir comme un moyen d'entrée et comme un moyen de sortie pour permettre aux individus de se déplacer dans les deux directions ;
ladite au moins une lame (310) à l'intérieur de chaque cylindre stationnaire formant une porte tournante est constituée d'un matériau résistant aux explosions.

**2.** Système de sécurité selon la revendication 1, dans lequel ledit premier moyen de détection comprend un système d'imagerie par micro-ondes réfléchies.

**3.** Système de sécurité selon la revendication 1 ou 2, dans lequel ledit premier moyen de détection comprend un système d'imagerie par micro-ondes transmis.

**4.** Système de sécurité selon l'une quelconque des revendications 1 à 3, comprenant en outre un mécanisme de verrouillage automatique dans lequel les portes tournantes (300) s'arrêtent pour fermer hermétiquement la zone isolée en réponse à une alarme signalant un seuil dépassé pour placer un individu suspecté (5) en isolement.

**5.** Système de sécurité selon l'une quelconque des revendications 1 à 4, comprenant en outre une alarme silencieuse émise en réponse à un signal de dépassement de seuil provenant dudit premier moyen de détection pour alerter les autorités sans affecter un individu suspecté (5).

**6.** Système de sécurité selon l'une quelconque des revendications 1 à 5, comprenant un deuxième moyen de détection employé dans le cylindre d'entrée et un troisième moyen de détection employé dans le cylindre de sortie, dans lequel lesdits mécanismes tournants s'arrêtent pour fermer hermétiquement la zone isolée lors d'un signal de dépassement de seuil reçu dudit deuxième ou troisième moyens de détection.

**7.** Système de sécurité selon la revendication 6, comprenant en outre une alarme silencieuse émise en réponse à un signal de dépassement de seuil provenant dudit deuxième ou troisième moyens de détection pour alerter les autorités avant de fermer hermétiquement la zone isolée et sans affecter un individu suspecté (5).

8. Système de sécurité selon la revendication 6 ou 7, dans lequel lesdits premier, deuxième et troisième moyens de détection comprennent chacun un système d'imagerie par micro-ondes transmis ou réfléchi.

9. Système de sécurité selon l'une quelconque des revendications 6 à 8, dans lequel lesdits premier, deuxième et troisième moyens de détection comprennent chacun un système d'imagerie par micro-ondes synchronisé avec un système d'imagerie vidéo.

10. Système de sécurité selon l'une quelconque des revendications 1 à 9, comprenant en outre un matériau résistant aux explosions à l'intérieur des parois de la zone isolée.

11. Système de sécurité selon l'une quelconque des revendications 1 à 10, comprenant en outre au moins une structure en matériau résistant aux explosions adj acente à la zone isolée.

Figure 1

Figure 2A

Figure 2B

Figure 3A

Figure 3B

Figure 3C

Figure 4

Figure 5A

Figure 5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030136052 A, De Boer
- US 6742301 B, Schwarz
- US 7707951 B
- US 4586441 A, Zekich
- US 8159534 B, Kuznetsov
- US 8228374 B, Kuznetsov
- US 6791487 B, Singh
- US 6469624 B, Whan
- US 5600303 A, Husseiny
- US 2013027932 W, Bergen
- US 2014160895 A